# EUROPÄISCHE PATENTANMELDUNG

(11) **EP 3 869 367 A1**
(43) Veröffentlichungstag der Anmeldung: **25.08.2021**
(21) Anmeldenummer: 20157998.4
(22) Anmeldetag: 18.02.2020
(51) Int. Cl.: G06F 21/50

(54) **COMPUTERGESTÜTZTES VERFAHREN ZUM SPEICHERN EINES INTEGRITÄTSSTATUS, INTEGRITÄTSSTATUSVORRICHTUNG UND COMPUTERPROGRAMMPRODUKT**

(71) Anmelder: Siemens Aktiengesellschaft, 80333 München (DE)
(72) Erfinder: Falk, Rainer, 85586 Poing (DE); Feist, Christian Peter, 80689 München (DE); Fries, Steffen, 85598 Baldham (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Die Erfindung betrifft ein computergestütztes Verfahren zum Überwachen eines Integritätsstatus einer Rechenvorrichtung, eine Integritätsstatusvorrichtung für eine Rechenvorrichtung und ein Computerprogrammprodukt. Das computergestützte Verfahren umfasst mehrere Schritte. Zunächst erfolgt das Festlegen eines Initialisierungswertes für einen Gesamtintegritätswert. Danach erfolgt das Speichern des Gesamtintegritätswerts in einem vertrauenswürdigen Speicherbereich einer Speichereinheit. Anschließend erfolgt das Ermitteln eines Integritätsstatus durch ein Integritätserkennungssystem und Erzeugen eines Integritätsstatuswertes. Danach erfolgt das Speichern des Integritätsstatuswertes in dem Gesamtintegritätswert in dem vertrauenswürdigen Speicherbereich als Integritätsstatus.

## Beschreibung

Die Integrität von Automatisierungsgeräten, insbesondere von Steuergeräten, speicherprogrammierbaren Steuerungen und industriellen Geräten des Internets der Dinge (IoT-Geräte) muss gewährleistet sein, um einen fehlerfreien Betrieb zu ermöglichen.

Angriffe oder Attacken auf ein IT-System oder ein ITbasiertes Automatisierungssystem, d.h. unerlaubte Zugriffe zum Schaden eines solchen Systems, können derzeit bereits mittels geeigneter Vorrichtungen bzw. Software detektiert werden, wie z.B. mittels eines Integritätsüberwachungssystems (engl.: Intrusion Detection System - IDS).

Es sind Host-basierte Integritätsdetektionssysteme (engl.: Host-based intrusion detection system - HIDS) bekannt. Diese erkennen unzulässiges Verhalten von Software, welche auf einem Host ausgeführt wird. Es ist mit diesem System möglich, periodisch die Integrität von Daten zu überprüfen.

Die Integrität kann auch während des Bootens überprüft werden (engl. Secure Boot, Measured Boot). Nachteilig überprüfen sie dann allerdings lediglich einmalig die Integrität einer zu überwachenden Rechenvorrichtung.

Erkennt das IDS, das HIDS oder ein Secure Boot eine Integritätsverletzung, muss eine Integritätsverletzungsnachricht abgeben werden. Die Ausgabe der Nachricht kann insbesondere per Mail, Log-Eintrag oder Generieren einer Meldung stattfinden.

Nachteilig kann das Generieren, die Ausgabe oder das Weiterleiten dieser Nachrichten durch Angreifer unterbunden werden. Ebenso ist es nachteilig möglich, dass ein Angreifer die Nachrichten löscht. Somit ist es nachteilig möglich, dass die Rechenvorrichtung trotz einer Integritätsverletzung weiter betrieben wird.

Es ist somit Aufgabe der vorliegenden Erfindung, ein Verfahren für eine Laufzeitüberwachung für eine Integrität einer Rechenvorrichtung anzugeben, wobei eine Integritätsverletzung zuverlässig erkannt und gespeichert wird.

Die Aufgabe wird mit einem computergestützten Verfahren gemäß Anspruch 1, einer Integritätsstatusvorrichtung gemäß Anspruch 14 und einem Computerprogrammprodukt gemäß Anspruch 15 gelöst.

Das erfindungsgemäße computergestützte Verfahren zum Überwachen eines Integritätsstatus einer Rechenvorrichtung umfasst folgende Schritte. Zunächst wird ein Initialisierungswert für einen Gesamtintegritätswert festgelegt. Der Gesamtintegritätswert wird in einem vertrauenswürdigen Speicherbereich gespeichert. Durch ein Integritätserkennungssystem wird ein Integritätsstatus ermittelt und daraus ein Integritätsstatuswert erzeugt. Der Integritätsstatuswert wird in dem Gesamtintegritätswert in dem vertrauenswürdigen Speicherbereich gespeichert.

Die erfindungsgemäße Integritätsstatusvorrichtung für eine Rechenvorrichtung zum Durchführen des erfindungsgemäßen computergestützten Verfahrens umfasst ein Integritätserkennungssystem zum Ermitteln eines Integritätsstatus und Erzeugen eines Integritätsstatuswertes. Sie umfasst weiterhin eine Speichereinheit mit einem vertrauenswürdigen Speicherbereich zum Speichern eines Gesamtintegritätswerts, wobei als Gesamtintegritätswert ein Initialisierungswert und/oder der Integritätsstatuswert gespeichert ist.

Das erfindungsgemäße Computerprogrammprodukt, welches direkt in einen Speicher einer programmierbaren Rechenvorrichtung eines Industriecomputers ladbar ist, umfasst Programmcode-Mittel, um das erfindungsgemäße Verfahren auszuführen, wenn das Computerprogrammprodukt in der Rechenvorrichtung des Industriecomputers ausgeführt wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren", "erzeugen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Unter einer "Speichereinheit" kann im Zusammenhang mit der Erfindung beispielsweise ein flüchtiger Speicher, insbesondere in Form von eines statischen Arbeitsspeichers (engl. static Random-Access Memory, SRAM) oder ein nicht flüchtiger Speicher, insbesondere ein Flash-Speicher oder ein gebrandter Speicher (engl.: Fuses) verstanden werden. Die Speichereinheit kann dabei alleinstehend, also als dedizierter Chip, oder als Teil eines anderen Chips ausgestaltet sein.

Bei dem erfindungsgemäßen Verfahren zum Überwachen eines Integritätsstatus einer Rechenvorrichtung erfolgt zunächst das Festlegen eines Initialisierungswertes für einen Gesamtintegritätswert. Dieser Initialisierungswert kann insbesondere ein Zufallswert, ein individuell für eine Rechenvorrichtung festgelegter Wert oder ein konstanter Initialisierungswert sein. In einem nächsten Schritt wird der Gesamtintegritätswert in einem vertrauenswürdigen Speicherbereich gespeichert. Als vertrauenswürdiger Speicherbereich wird eine Speichereinheit angesehen, welche speziell vor physikalischen und / oder Software-basierten Manipulationen, insbesondere Zurücksetzen, Löschen oder beliebiges Ändern zur Laufzeit, geschützt ist. Weiterhin wird ein Integritätsstatus durch ein Integritätserkennungssystem ermittelt und ein Integritätsstatuswert erzeugt. Als Integritätserkennungssystem (engl.: intrusion detection system -IDS) wird ein System verstanden, welches Angriffe gegen eine Rechenvorrichtung erkennt. Der Integritätsstatuswert wird in dem Gesamtintegritätswert in dem vertrauenswürdigen Bereich gespeichert. Der Integritätsstatuswert bezeichnet das Ergebnis einer Integritätsprüfung einer oder mehrerer Komponenten einer Rechenvorrichtung durch das Integritätserkennungssystem, wobei als zu überprüfende Komponenten der Rechenvorrichtung insbesondere Programmbinärdateien, Konfigurationsdateien, Projektierungsdateien oder Prozesslisten verstanden werden.

Vorteilhaft wird durch das erfindungsgemäße Verfahren, insbesondere durch das Speichern des Gesamtintegritätswertes in einem vertrauenswürdigen Bereich, erreicht, dass ein Integritätsstatuswert, insbesondere nach einer erkannten Integritätsverletzung, derart sicher gespeichert ist, dass ein Angreifer diesen Wert nicht verändern oder zurücksetzen kann. In anderen Worten wird eine Information über den Integritätsstatus der Rechenvorrichtung nicht manipulierbar durch Dritte gespeichert. Somit sind verlässliche Aussagen darüber möglich, ob die Rechenvorrichtung zuverlässig und integer arbeitet. Dies ist insbesondere bei industriell eingesetzten Rechenvorrichtungen von hoher Bedeutung.

In einer vorteilhaften Ausgestaltung und Weiterbildung der Erfindung wird der Gesamtintegritätswert, insbesondere nach einer erkannten Integritätsverletzung, durch eine kryptographische Prüfsumme abhängig von dem Initialisierungswert und/oder einem zeitlich vorhergehenden Integritätsstatuswert erzeugt.

Die kryptographische Prüfsumme kann beispielsweise mit einem kryptographischen Hash, einem Nachrichtenauthentifizierungscode (engl. "Message Authentication Code", MAC) oder einer digitalen Signatur gebildet werden. Die Prüfsumme kann insbesondere über einen Teil eines Datenelements, beispielsweise des Initialisierungswertes, oder über das gesamte Datenelement, beispielsweise den Initialisierungswert und/oder einem zeitlich vorhergehenden Initialisierungswert gebildet werden.

Bei der kryptographischen Funktion kann es sich beispielsweise um eine Einwegfunktion insbesondere um eine Hashfunktion der Familie SHA-2 (engl. "Secure Hash Algorithm") oder SHA-3 handeln. Die Berechnung der Prüfsumme kann beispielsweise unter Verwendung eines Prozessors und/oder Speichers erfolgen.

Vorteilhaft erhöht das Einsetzen einer kryptographischen Prüfsumme die Robustheit des Gesamtintegritätswertes gegenüber Manipulation zusätzlich. Ein Zurücksetzen oder Fälschen des Gesamtintegritätswertes auf den Initialisierungswert oder einen anderen, durch den Angreifer kontrollierten Wert, ist vorteilhaft nicht mehr mit einem praktikablen, in anderen Worten sinnvoll durchführbaren, Aufwand möglich.

In einer weiteren vorteilhaften Ausgestaltung und Weiterbildung der Erfindung wird als der vertrauenswürdige Speicherbereich ein Trusted-Plattform-Modul verwendet. Als Trusted-Plattform-Modul wird ein integrierter Schaltkreis, insbesondere ein Prozessor verstanden, der eine Rechenvorrichtung um Sicherheitsfunktionen erweitert. Das Trusted-Plattform-Modul umfasst ein Konfigurationsregister, welches kryptographisch erweiterbar ist. Der Gesamtintegritätswert wird vorteilhaft kryptographisch geschützt als Erweiterung des Konfigurationsregisters gespeichert.

In einer vorteilhaften Ausgestaltung und Weiterbildung der Erfindung können unterschiedliche Schlüssel in Abhängigkeit des Gesamtintegritätswerts durch einen Applikationsprozessor nutzbar sein. Insbesondere kann ein erster Schlüssel nur nutzbar sein, solange der Initialisierungswert als Gesamtintegritätswert gespeichert ist. Nach einer durch das Integritätserkennungssystem erkannten Integritätsverletzung wird der erste Schlüssel ungültig und ist demnach nicht mehr nutzbar. Ein zweiter Schlüssel wird bei Erkennen der Integritätsverletzung nutzbar. Dadurch kann erreicht werden, dass ein Schlüssel zum manipulationsgeschützten Melden einer Integritätsverletzung erst dann nutzbar bzw. zugreifbar ist, wenn tatsächlich eine Integritätsverletzung erkannt wurde.

Das Melden der Integritätsverletzung wird hier in anderen Worten indirekt mit Hilfe des Trusted-Plattform-Modul vorgenommen. Das Trusted-Plattform-Modul kann, in Abhängigkeit des gespeicherten Gesamtintegritätswertes, einen bestimmten Schlüssel zur Verwendung freigeben. Ist die Freigabe / Verwendung des Schlüssels also an einen bestimmten Integritätswert, der eine Manipulation darstellt, gebunden, kann mit Hilfe des Schlüssels eine Meldung beispielsweise signiert werden. Der Empfänger der Meldung kann die Signatur verifizieren und sich vorteilhaft sicher sein, dass ein bestimmter Zustand (erkannte Manipulation) vorgelegen haben muss.

In einer weiteren vorteilhaften Ausgestaltung und Weiterbildung der Erfindung erfolgt das Speichern des Gesamtintegritätswerts dauerhaft. Insbesondere erfolgt das Speichern des Gesamtintegritätswerts dauerhaft, wenn eine Integritätsverletzung erkannt wurde. Das dauerhafte Speichern erfolgt insbesondere durch das Programmieren eines einmalprogrammierbaren Speicherbereichs (engl.: One-Time-Programmable, OTP). Dieser Speicherbereich kann insbesondere basierend auf Fuse- oder Antifuse-Technologie ausgestaltet sein.

Bei der Verwendung eines Trusted - Plattform - Moduls (engl. trusted platform module TPM) erfolgt das dauerhafte Speichern durch die Verwendung von nicht-volatilen Indices im Plattform-Konfigurationsregister-Modus (PCR-Modus) des Trusted - Plattform -Moduls. Das Zugreifen auf Indices im Plattform-Konfigurationsregister-Modus, insbesondere das Zurücksetzen oder beliebige Modifizieren, ist nur mittels passender Zugriffsregelungen, insbesondere in Form eines Passworts, möglich. Dies bietet den Vorteil, dass kompromittierte Rechenvorrichtungen, in anderen Worten Rechenvorrichtungen, bei denen eine Integritätsverletzung erkannt wurde, auch nach einem Neustart durch das Auslesen des Gesamtintegritätswerts noch als Rechenvorrichtung mit bekannter Integritätsverletzung erkannt werden. Insbesondere in Netzwerken mit sehr hohen Sicherheitsanforderungen kann so überprüft werden, ob auf einem der verwendeten Rechenvorrichtungen zu einem früheren Zeitpunkt eine Integritätsverletzung erkannt wurde.

In einer weiteren vorteilhaften Ausgestaltung und Weiterbildung der Erfindung können unterschiedliche vertrauenswürdige Speicherbereiche oder Speicherarten für unterschiedliche Ereignisse verwendet werden. Insbesondere kann ein Trusted-Plattform-Modul-Konfigurationsregister für das Speichern von Statuswerten, die auf Manipulationen an der Geräte Firmware hindeuten, und ein anderes Konfigurationsregister für spezielle Log-Nachrichten, die auf eine Manipulation hinweisen, eingesetzt werden. Dies erhöht die Zuverlässigkeit der Speicherung des Gesamtintegritätswerts und des Auslesens des Gesamtintegritätswerts und erhöht insbesondere die Robustheit gegenüber Angriffen, die darauf abzielen, den oder die gespeicherten Integritätswerte zu manipulieren.

In einer weiteren vorteilhaften Ausgestaltung und Weiterbildung der Erfindung überprüft das Integritätserkennungssystem Komponenten der Rechenvorrichtung auf Integrität und ermittelt einen Zustandswert. Den Zustandswert vergleicht es mit einem Referenzregelwert. Bei einer Abweichung der beiden Werte wird eine Integritätsverletzung als Integritätsstatus ermittelt.

Unter einer unzureichenden Übereinstimmung kann im Zusammenhang mit der Patentanmeldung verstanden werden, dass beispielsweise Datenbits von verschlüsselten Daten eines Datenpakets einer Netzwerkkommunikation bei einer statistischen Analyse statistischen Eigenschaften, insbesondere erwarteten oder vorgegebenen statistischen Eigenschaften, nicht genügt. Diese statistischen Eigenschaften können beispielsweise durch einen Verschlüsselungsalgorithmus vorgegeben werden, der durch eine Sicherheitsrichtlinie für die Netzwerkkommunikation gefordert wird. Dies kann bedeuten, dass die Datenbits der Nutzdaten des Datenpaketes beispielsweise eine zufällige statistische Verteilung aufweisen sollen, um zu bestätigen, dass diese verschlüsselt sind. Weisen die Datenbits hingegen eine nicht-zufällige statistische Verteilung auf, weisen diese insbesondere eine unzureichende Übereinstimmung mit vorgegebenen statistischen Eigenschaften auf. Unter einer unzureichenden Übereinstimmung kann aber auch verstanden werden, dass eine oder mehrere Anforderungen einer Sicherheitsrichtlinie an eine Netzwerkkommunikation nicht erfüllt sind.

Unter einer unzureichenden Übereinstimmung kann im Zusammenhang mit der Patentanmeldung weiterhin verstanden werden, dass beispielsweise Datenbits einer kryptographische Prüfsumme einer Datei nicht einer bekannten Referenzprüfsumme entsprechen.

Das Integritätserkennungssystem umfasst insbesondere eine Laufzeit-Integritätsüberwachung, welche während der Laufzeit der Rechenvorrichtung Komponenten der Rechenvorrichtung, insbesondere die Gerätesoftware, die laufenden Prozesse sowie Eintragungen (Logs) überprüft. Der Vergleich der gemessenen Zustände der überprüften Komponenten der Rechenvorrichtung mit entsprechenden Referenzregeln ermöglicht das Erkennen einer Integritätsverletzung. Daraufhin wird ein Integritätsstatuswert erzeugt.

In einer weiteren vorteilhaften Ausgestaltung und Weiterbildung der Erfindung ersetzt der Integritätsstatuswert den Initialisierungswertstatuswert des Gesamtintegritätswerts beim Speichern. Vorteilhaft wird somit ein definierter Wert als Gesamtintegritätswert gespeichert und lässt sich bei Bedarf auslesen.

In einer weiteren vorteilhaften Ausgestaltung und Weiterbildung der Erfindung wird der Gesamtintegritätswert um den Integritätsstatuswert beim Speichern erweitert. Der gespeicherte Gesamtintegritätswert kann somit insbesondere von dem vorherigen gespeicherten Wert abhängen, indem der hier beschriebene Speichervorgang z.B. einen fortlaufenden, kryptographischen Hashwert berechnet und abspeichert. Dies hat den Vorteil, dass ein Angreifer, der Zugriff auf die Erweiterungsfunktion hat, den abgespeicherten Wert nicht ohne hohen Aufwand beliebig festlegen kann.

In einer weiteren vorteilhaften Ausgestaltung und Weiterbildung der Erfindung erfolgt ein Bereitstellen des Gesamtintegritätswertes geschützt durch eine kryptographische Prüfsumme, insbesondere durch eine kryptographische Signatur. Somit wird vorteilhaft das Bereitstellen des Gesamtintegritätswertes vor Manipulation und ist somit robust gegenüber Fälschungen. Ein Dritter kann dabei vorteilhaft nicht den Gesamtintegritätswert beim Ausgeben des geschützten Gesamtintegritätswertes verändern.

In einer weiteren vorteilhaften Ausgestaltung und Weiterbildung der Erfindung wird der Gesamtintegritätswert lokal mittels eines Applikationsprozessors oder eines Mikrocontrollers überwacht. Vorteilhaft erfolgt die Überwachung während der Laufzeit der Rechenvorrichtung und ermöglicht somit das Bereitstellen eines Alarms oder einer Meldung über eine Integritätsverletzung während der Laufzeit der Rechenvorrichtung.

In einer weiteren vorteilhaften Ausgestaltung und Weiterbildung der Erfindung erfolgt das Speichern des Gesamtintegritätswertes nach Abschluss eines Arbeitszyklus, bis zu einem manuellen Zurücksetzen der Rechenvorrichtung oder kontinuierlich. Vorteilhaft kann somit für die Rechenvorrichtung und deren Einsatz, insbesondere wenn der Einsatz in der industriellen Anwendung erfolgt, die Dauer einer nachweisbaren Integritätsverletzung bestimmt werden.

In einer weiteren vorteilhaften Ausgestaltung und Weiterbildung der Erfindung beschreibt der Integritätsstatuswert die Integrität wenigstens einer Komponente der Rechenvorrichtung. Als Komponenten der Rechenvorrichtung werden dabei insbesondere Programmbinärdateien, Konfigurationsdateien, Projektierungsdaten oder Prozesslisten verstanden. Eine Referenz des Integritätsverletzungsereignisses und/oder eine Referenz der betroffenen Komponenten kann als kryptographische Prüfsumme der Ereignisdaten als Gesamtintegritätswert gespeichert werden. Die Ereignisdaten, auf deren Basis die Referenz gebildet wird, können dabei beliebig fein gewählt werden.

In einer weiteren vorteilhaften Ausgestaltung und Weiterbildung der Erfindung wird als Recheneinheit eine Steuervorrichtung, ein Industriecomputer, ein Edge-Gateway, ein IoT-Knoten oder ein IoT-Gateway verwendet. Die Integrität der genannten Rechenvorrichtungen ist aufgrund der zentralen Position oder der industriellen Nutzung besonders wichtig. Es ist vorteilhaft, wenn ein Integritätswert zuverlässig und nicht manipulierbar gespeichert und ausgelesen werden kann.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 eine Rechenvorrichtung mit einem Integritätserkennungssystem, Komponenten und einer Speichereinheit;
Figur 2 ein Verfahrensdiagramm zu einem computergestützten Verfahren zum überwachen eines Integritätsstatus einer Rechenvorrichtung.

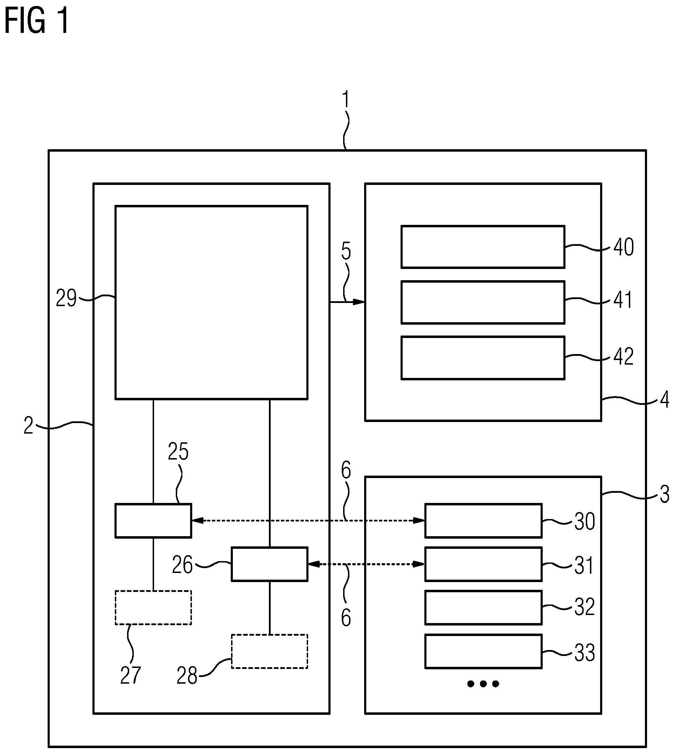

Figur 1 zeigt eine Rechenvorrichtung 1 mit einem Integritätserkennungssystem 2, Komponenten 3 und einer Speichereinheit 4. Das Integritätserkennungssystem 2 umfasst eine Integritätsstatusermittlungseinheit 29, eine erste Zustandswertermittlungseinheit 25 und eine zweite Zustandswertermittlungseinheit 26. Die erste Zustandswertermittlungseinheit 25 ist mit einem ersten Referenzregelwerk 27 verbunden. Die zweite Zustandswertermittlungseinheit 26 ist mit einem zweiten Referenzregelwerk 28 verbunden. Die Komponenten 3 umfassen unter anderem wenigstens eine Programmbinärdatei 30, wenigstens eine Konfigurationsdatei 31, wenigstens einen Prozess 32 und wenigstens eine Log-Datei 33. Die Komponenten 3 können ebenso weitere für die Rechenvorrichtung 1 relevante Dateien umfassen. Die Speichereinheit 4 umfasst einen zurücksetzbaren Speicherbereich 40, einen Laufzeitspeicherbereich 41 und einen Lebenszeitspeicherbereich 42. Insbesondere der Laufzeitspeicherbereich 41 und der Lebenszeitspeicherbereich 42 sind als Trusted-Plattform- Modul ausgestaltet. Der Laufzeitspeicherbereich 41 umfasst insbesondere ein Plattformkonfigurationsregister. Der Lebenszeitspeicherbereich 42 umfasst insbesondere einen Passwort-geschätzten nich flüchtigen Index. Der Lebenszeitspeicherbereich 42 kann aber auch, alternativ zu dem Trustes-Plattform-Modul, dauerhaft als einmalprogrammierbare Speichereinheit (One-Time-Programmable, insbesondere Fuses der CPU) ausgestaltet sein.

Die erste Zustandswertermittlungseinheit 25 und die zweite Zustandswertermittlungseinheit 26 überprüfen die unterschiedlichen Komponenten 3, in diesem Beispiel Programmbinärdatei 30 und die Konfigurationsdatei 31. Die von der ersten Zustandswertermittlungseinheit 25 und von der zweiten Zustandswertermittlungseinheit 26 ermittelten Zustandswerte 6 werden mittels eines ersten Referenzregelwerk 27 und/oder eines zweiten Referenzregelwerk 28 in der Integritätsstatusermittlungseinheit 29 ausgewertet. Zweckmäßigerweise umfasst das Referenzregelwerk Referenzen zu der überprüften Komponente 3. Die Referenzen der Referenzregelwerke 27, 28 werden mit den Zustandswerten 6 verglichen. Weichen die Referenzwerte und die Zustandswerte voneinander ab, wird eine Integritätsverletzung erkannt. Weiterhin kann das Ergebnis in der Integritätsstatusermittlungseinheit 29 kategorisiert werden. Dabei können insbesondere Informationsdaten zu der Integritätsverletzung zu einem Integritätsstatuswert 5 zusammengefasst werden. Die Genauigkeit dieser Informationsdaten zu der Integritätsverletzung können gewählt werden. Es kann lediglich festgehalten werden, dass eine Integritätsverletzung stattgefunden hat. Es ist ebenso möglich, Informationen über die Betroffenen Komponenten 3 für eine spätere Analyse in den Integritätsstatuswert 5 mit einzubeziehen. Vorteilhaft kann so später zwischen mehreren unterschiedlichen Integritätsverletzung unterschieden werden.

Das Integritätserkennungssystem 2 arbeitet zur Laufzeit (engl. "run time check"), in anderen Worten parallel während der Ausführung einer Hauptfunktion der Recheneinheit. Bei der Hauptfunktion der Recheneinheit kann es sich insbesondere um eine Steuerungs- oder Überwachungsfunktionen eines technischen Systems oder um eine Verarbeitung von Nutzerdaten handeln.

Das Integritätserkennungssystem 2 arbeitet in einer bevorzugten Ausgestaltung in Echtzeit (engl. "realtime run time check"). Unter "Echtzeit" kann im Zusammenhang mit der Patentanmeldung verstanden werden, dass das Analysieren und/oder das Bereitstellen zuverlässig innerhalb einer vorbestimmten Zeitspanne, beispielsweise in einem festen Zeitraster, durchgeführt wird.

Der Integritätsstatuswert 5 wird anschließend in einem vertrauenswürdigen Speicherbereich der Speichereinheit 4 gespeichert. Das Speichern erfolgt insbesondere mittels des Einsatzes einer kryptographischen Einwegoperation. Die kryptographische Einwegoperation bezieht einen Initialisierungswert, bei einem ersten Speichervorgang, und/oder einen zeitlich vorhergehenden Integritätsstatuswert in die Berechnung eines Gesamtintegritätswerts mit ein. Der Initialisierungswert, welcher insbesondere 128 Bit oder 256 Bit umfasst, wird beim Systemstart mit einem Zufallswert, einem individuell für das Gerät festgelegten Initialisierungswert oder einem konstanten Wert initialisiert. Vorteilhaft wird auf diese Weise der von der Integritätsstatusermittlungseinheit 29 ermittelte Integritätsstatuswert 5 in einem vertrauenswürdigen Bereich auf nicht umkehrbare Art als mit einem zeitlich vorhergehenden Integritätsstatuswert und/oder dem Initialisierungswert als Gesamtintegritätswert gespeichert. Das Einsetzen einer Einwegoperation verhindert, dass auf einen früheren Integritätsstatuswert, den Initialisierungswert oder einen von einem Angreifer festgelegten Wert zurückgerechnet werden kann. Die Statusinformation, dass eine Integritätsverletzung erkannt wurde, liegt somit verlässlich und nicht manipulierbar vor.

In diesem Ausführungsbeispiel umfasst die Speichereinheit 4 drei unterschiedliche Speicherbereiche: einen zurücksetzbaren Speicherbereich 40, einen Laufzeitspeicherbereich 41 und einen Lebenszeitspeicherbereich 42. Der Gesamtintegritätswert kann in wenigstens einem dieser Speicherbereiche gespeichert werden. Es ist auch möglich, dass der Gesamtintegritätswert in jedem der genannten Speicherbereiche gespeichert wird. In dem zurücksetzbaren Speicherbereich 40 kann der Gesamtintegritätswert während der Laufzeit der Rechenvorrichtung 1 zurückgesetzt werden. Der Laufzeitspeicherbereich 41 wird nach einem Neustart der Rechenvorrichtung 1 zurückgesetzt. Der Lebenszeitspeicherbereich 42 speichert Daten kontinuierlich und kann nicht oder nur unter bestimmten Voraussetzungen zurückgesetzt werden. Eine Voraussetzung könnte das Bereitstellen eines Passworts sein. Eine dauerhafte Speichereinheit kann beispielsweise als einmalprogrammierbares Speicherelement, insbesondere als Fuses oder OTP-Memory, ausgestaltet sein. Hier wird der Gesamtintegritätswert und somit auch eine erfasste Integritätsverletzung dauerhaft gespeichert.

Vorteilhaft wird durch das kryptographische Speichern des Gesamtintegritätswerts verhindert, dass ein Integritätsstatus einer erkannten Integritätsverletzung durch einen Dritten wieder auf einen Integritätsstatus "integer" zurückgesetzt wird.

Allgemeine Ereignisse, welche das Integritätserkennungssystem 2 durchläuft, insbesondere ein Neustart des Integritätserkennungssystems 2 oder ein Ausführen einer ersten Zustandswertermittlung können zusätzlich protokolliert werden. Dies erhöht die Zuverlässigkeit des Integritätserkennungssystems 2, da Manipulationen zusätzlich leichter erkannt werden können.

Der in der Speichereinheit 4 gespeicherte Gesamtintegritätswert kann auf unterschiedliche Arten bereitgestellt werden. Er kann lokal auf der Rechenvorrichtung 1 geprüft werden. Dies kann insbesondere mittels eines Applikationsprozessors oder durch einen separaten Mikrocontroller oder Krypto-Controller erfolgen. Es ist ebenso vorteilhaft möglich, den Gesamtintegritätswert aus der Speichereinheit 4 aus der Ferne (engl. "remote") auszulesen. Insbesondere kann der Gesamtintegritätswert in einem Fernzeugnis (engl. "remote attestation") bereitgestellt werden. Dabei werden die Werte entsprechender Plattformkonfigurationsregister des Trusted-Plattform-Moduls verwendet und mit einem nicht extrahierbaren privaten Schlüssel signiert. Die Signatur und die Plattformkonfigurationsregister können anschließend in eine andere Rechenvorrichtung, insbesondere einen Server, zur Überprüfung weitergegeben werden. Der Zugang der Rechenvorrichtung 1 zu weiteren Rechenvorrichtungen oder zu einem Netzwerk kann somit vorteilhaft kontrolliert werden.

Es ist ebenfalls möglich, dass der Speicherbereich 4, insbesondere der Gesamtintegritätswert, direkt von einem Anwender oder einer Softwarekomponente ausgelesen und ausgewertet werden kann. Erfolgt das Speichern in der Speichereinheit 4 mittels eines Trusted-Plattform-Moduls, ist es möglich den Gesamtintegritätswert auch für die Zugriffskontrolle auf kryptographisch gesicherte Daten, insbesondere Schlüssel, als Bedingung zu verwenden. Insbesondere kann ein mithilfe des Trusted-Plattform-Moduls geschützter Schlüssel nur entschlüsselt oder verwendet werden, wenn eine Integritätsverletzung nicht stattgefunden hat.

Nach dem Auswerten des Gesamtintegritätswertes, insbesondere nach dem Erkennen einer Integritätsverletzung, kann eine Mail an einen zugelassenen Anwender geschickt werden. Es ist zusätzlich oder alternativ ebenso möglich, einen Log-Eintrag zu generieren und in einer Log-Datei zu speichern, oder insbesondere eine Log-Meldung zu generieren und per Syslog zu verschicken, ein Monitoring-Event Auszulösen und per SNMP-Trap an eine Monitoring-Einheit zu melden oder einen Neustart des Gerätes durchzuführen. Das Auswerten kann während der Laufzeit, z.B. zyklisch oder Ereignis-basiert, oder während des Bootvorgangs, insbesondere eines Secure Boot Vorgangs, erfolgen. Bei einem Secure Boot wird ausgehend von einer vertrauenswürdigen ersten Komponente die jeweilige nächste Komponente der Bootkette, insbesondere dem Bootloader oder dem Kernel, auf Integrität und Authentizität geprüft. Typischerweise erfolgt das Überprüfen unter Verwendung von digitalen Signaturen. Es ist auch möglich, eine Integritätsverletzung nur aufzuzeichnen und mit der Bootsequenz dennoch fortzufahren.

Das dem Auswerten des Gesamtintegritätswertes kann auch als Teil eines "trusted boot" erfolgen. Dieser Vorgang wird typischerweise unter Verwendung eines Trusted-Plattform-Moduls durchgeführt. Dabei bildet ausgehend von einem Vertrauenspfad (engl. "root of trust") jede Bootkomponente eine kryptographische Prüfsumme der nächsten Bootkomponente. Die Prüfsummen werden anschließend in einem Plattform-Konfigurationsregister des Trusted-Plattform-Moduls gespeichert.

Die Speichereinheit 4 ist insbesondere sicherheitsgeschützt. Unter "sicherheitsgeschützt" kann im Zusammenhang mit der Erfindung beispielsweise verstanden werden, dass insbesondere nur lesend auf eine sicherheitsgeschützten Speicherbereich zugegriffen werden kann oder dass insbesondere nur eine bestimmte Komponente oder bestimmte Komponenten zugreifen können. Hierzu können beispielsweise die entsprechenden sicherheitsgeschützten Komponenten Schutzmodule oder Versiegelungen aufweisen.

Zusätzlich zu dem Integritätsüberwachungssystem kann die Rechenvorrichtung 1 Vorrichtungen umfassen, welche eine Manipulation bereits von außen ersichtlich machen. Insbesondere kann die Rechenvorrichtung 1 Bohrschutzfolien oder spezielle Sensoren (insbesondere Temperatursensoren, Spannungssensoren, Taktfrequenzmessvorrichtungen, Lichtmessvorrichtungen und Strahlungsmessvorrichtungen) umfassen. Somit können Angriffe vorteilhaft auch an der Hardware erkannt werden.

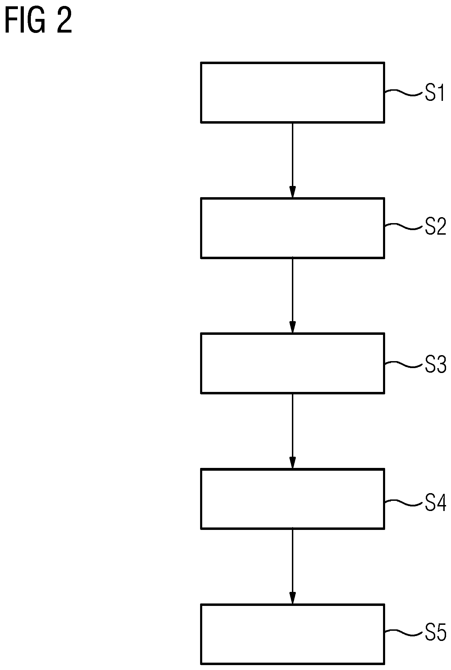

Figur 2 zeigt ein Verfahrensdiagramm eines computergestützten Verfahrens zum Überwachen eines Integritätsstatus einer Rechenvorrichtung 1 mit mehreren Schritten. In einem ersten Schritt S1 erfolgt das Festlegen eines Initialisierungswertes für einen Gesamtintegritätswert. In einem zweiten Schritt S2 erfolgt das Speichern des Gesamtintegritätswertes in einem vertrauenswürdigen Speicherbereich einer Speichereinheit 4. In einem dritten Schritt S3 erfolgt das Ermitteln eines Integritätsstatus durch ein Integritätserkennungssystem 2. In einem vierten Schritt S4 erfolgt das Erzeugen eines Integritätsstatuswertes 5. In einem fünften Schritt S5 erfolgt das Speichern des Integritätsstatuswertes 5 in dem Gesamtintegritätswert.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Rechenvorrichtung
- 2: Integritätserkennungssystem
- 3: Komponenten
- 4: Speichereinheit
- 5: Integritätsstatuswert
- 6: Zustandswert
- 25: erste Zustandswertermittlungseinheit
- 26: zweite Zustandswertermittlungseinheit
- 27: erstes Referenzregelwerk
- 28: zweites Referenzregelwerk
- 29: Integritätsstatusermittlungseinheit
- 30: Programmbinärdatei
- 31: Konfigurationsdatei
- 32: Prozess
- 33: Logdatei
- 40: zurücksetzbarer Speicherbereich
- 41: Laufzeit-Speicherbereich
- 42: Lebenszeit-Speicherbereich
- S1: Festlegen eines Initialisierungswerts für einen Gesamtintegritätswert
- S2: Speichern des Gesamtintegritätswerts in einem vertrauenswürdigen Speicherbereich einer Speichereinheit
- S3: Ermitteln eines Integritätsstatus durch ein Integritätserkennungssystem
- S4: Erzeugen eines Integritätsstatuswertes
- S5: Speichern des Integritätsstatuswertes in dem Gesamtintegritätswert

## Patentansprüche

1. Computergestütztes Verfahren zum Überwachen eines Integritätsstatus einer Rechenvorrichtung (1) mit folgenden Schritten:
- Festlegen eines Initialisierungswertes für einen Gesamtintegritätswert,
- Speichern des Gesamtintegritätswerts in einem vertrauenswürdigen Speicherbereich (40, 41, 42) einer Speichereinheit (4),
- Ermitteln eines Integritätsstatus durch ein Integritätserkennungssystem (2) und Erzeugen eines Integritätsstatuswertes (5),
- Speichern des Integritätsstatuswertes (5) in dem Gesamtintegritätswert in dem vertrauenswürdigen Speicherbereich (40, 41, 42) als Integritätsstatus.

2. Computergestütztes Verfahren nach Anspruch 1, wobei der Gesamtintegritätswert, insbesondere nach einer erkannten Integritätsverletzung, durch eine kryptographische Prüfsumme abhängig von dem Initialisierungswert oder einem zeitlich vorhergehenden Integritätsstatuswert erzeugt wird.

3. Computergestütztes Verfahren nach Anspruch 1 oder 2, wobei als der vertrauenswürdige Speicherbereich ein Trusted-Plattform-Modul verwendet wird.

4. Computergestütztes Verfahren nach einem der vorhergehenden Ansprüche, wobei das Integritätserkennungssystem (2) Komponenten (3) der Rechenvorrichtung (1) auf Integrität überprüft und einen Zustandswert (6) ermittelt, den Zustandswert (6) mit einem Referenzregelwert (27, 28) vergleicht und bei einer Abweichung der beiden Werte eine Integritätsverletzung als Integritätsstatus ermittelt.

5. Computergestütztes Verfahren nach einem der vorhergehenden Ansprüche, wobei der Integritätsstatuswert (5) den Initialisierungswert des Gesamtintegritätswerts beim Speichern ersetzt.

6. Computergestütztes Verfahren nach einem der Ansprüche 1 bis 4, wobei der Gesamtintegritätswert um den Integritätsstatuswert (5) beim Speichern erweitert wird.

7. Computergestütztes Verfahren nach einem der vorhergehenden Ansprüche, wobei ein Bereitstellen des Gesamtintegritätswerts geschützt durch eine kryptographische Prüfsumme erfolgt.

8. Computergestütztes Verfahren nach einem der vorhergehenden Ansprüche, wobei der Gesamtintegritätswert lokal mittels eines Applikationsprozessors oder eines Mikrocontrollers überwacht wird.

9. Computergestütztes Verfahren nach einem der vorhergehenden Ansprüche, wobei der Gesamtintegritätswert mittels einer Remoteverbindung überwacht wird.

10. Computergestütztes Verfahren nach einem der vorhergehenden Ansprüche, wobei das Speichern des Gesamtintegritätswertes nach Abschluss eines Arbeitszyklus, bis zu einem manuellen Zurücksetzen oder kontinuierlich erfolgt.

11. Computergestütztes Verfahren nach einem der vorhergehenden Ansprüche, wobei der Integritätsstatuswert (5) die Integrität wenigstens einer Komponente (3) der Rechenvorrichtung (1) beschreibt.

12. Computergestütztes Verfahren nach Anspruch 10, wobei als Komponente (3) wenigstens eine Programmbinärdatei, wenigstens eine Konfigurationsdatei, wenigstens eine Projektierungsdatei und/oder wenigstens eine Liste erlaubter Prozesse überwacht wird.

13. Computergestütztes Verfahren, wobei als Rechnereinheit (1) eine Steuerungsvorrichtung, ein Industriecomputer, ein IoT-Knoten oder ein IoT-Gateway verwendet wird.

14. Integritätsstatusvorrichtung für eine Rechenvorrichtung (1) zum Durchführen des computergestützten Verfahrens gemäß einem der Ansprüche 1 bis 13 mit:
- einem Integritätserkennungssystem (2) zum Ermitteln eines Integritätsstatus und Erzeugen eines Integritätsstatuswerts (5),
- einer Speichereinheit (4) mit einem vertrauenswürdigen Speicherbereich (40, 41, 42) zum Speichern eines Gesamtintegritätswerts, wobei als Gesamtintegritätswert ein Initialisierungswert und/oder der Integritätsstatuswert gespeichert ist.

15. Computerprogrammprodukt, welches direkt in eine Speichereinheit (4) einer programmierbaren Rechenvorrichtung (1) eines Industriecomputers ladbar ist, mit Programmcode-Mitteln, um ein Verfahren nach einem der Ansprüche 1-13 auszuführen, wenn das Computerprogrammprodukt in der Rechenvorrichtung (1) des Industriecomputers ausgeführt wird.
